# EUROPÄISCHE PATENTSCHRIFT

(11) **EP 0 787 319 B1**
(45) Veröffentlichungstag und Bekanntmachung des Hinweises auf die Patenterteilung: **07.01.1999**
(21) Anmeldenummer: 95935920.9
(22) Anmeldetag: 09.10.1995
(51) Int. Cl.: G05B 19/416

(54) **RUCKBEGRENZTE GESCHWINDIGKEITSFÜHRUNG**
VELOCITY CONTROL WITH LIMITED JOLTING
COMMANDE DE VITESSE A LIMITATION DE COUPLE

(30) Priorität: 21.10.1994 EP 94116655
(43) Veröffentlichungstag der Anmeldung: 06.08.1997
(73) Patentinhaber: SIEMENS AKTIENGESELLSCHAFT, 80333 München (DE)
(72) Erfinder: SPETH, Wolfgang, D-71723 Grossbottwar (DE); WESTERMEYER, Wilhelm, D-90425 Nürnberg (DE)
(86) Internationale Anmeldenummer: EP9503973
(87) Internationale Veröffentlichungsnummer: WO9612992

(56) Entgegenhaltungen:
- EP-A- 0 089 156
- EP-A- 0 191 103
- EP-A- 0 268 491
- EP-A- 0 299 080
- EP-A- 0 419 706
- EP-A- 0 440 805
- EP-A- 0 530 033
- WO-A-94/12916

## Beschreibung

Die Erfindung bezieht sich auf ein Verfahren zur Geschwindigkeitsführung von elektrischen Antrieben, insbesondere von Werkzeugmaschinen oder Robotern.

Moderne Antriebe, beispielsweise zum Einsatz bei Werkzeugmaschinen oder Robotern, zeichnen sich durch eine hohe Dynamik aus. Die durch die industriellen Steuerungen sollwertseitig vorgegebenen Werte zur Geschwindigkeitsführung, die häufig auch Beschleunigungssprünge beinhalten, erzeugen daher Beschleunigungsstöße an der Maschine. Weist ein an einer solchen Maschine angeschlossenes Getriebe sogenannte Loseeffekte auf, d.h., daß sich z.B. im Laufe der Betriebeszeit ein Spiel zwischen z.B. zahnrädern eingestellt hat, so wird das Getriebe schlagförmig belastet. Aufgrund des hystereseartigen Verlaufes eines solchen losebehafteten Schlittenantriebes können erhebliche Schwingungen an der Maschine hervorgerufen werden. Solche Schwingungen sind jedoch unerwünscht, da sie z.B. beim Schleifen zu einer Verschlechterung der Oberflächengüte oder beim Laserschneiden zu einer verschlechterten Maßhaltigkeit führen. Aus diesem Grunde ist man bestrebt, die Geschwindigkeitsführung eines solchen modernen Antriebes derart auszugestalten, daß Rucke, die Ableitung der Beschleunigung nach der Zeit, möglichst begrenzt werden.

Es ist bekannt, daß herkömmliche Verfahren zur Geschwindigkeitsführung in Werkzeugmaschinensteuerungen zur Erfüllung dieses Erfordernisses entweder eine geschwindigkeitsunabhängige Beschleunigungsbegrenzung berücksichtigen, die unabhängig von der jeweiligen Drehzahl des elektrischen Antriebes die mögliche Achsbeschleunigung begrenzt, oder es werden mittels einer Glättungszeitkonstanten auf der Bahn sowie einer zusätzlichen Glättung im Antrieb die Geschwindigkeitswerte gefiltert (vgl. dazu die EP-O 477 412 Al und US-A-4 603 286).

Diese beiden standardgemäß eingesetzten Verfahren der Geschwindigkeitsführung in Werkzeugmaschinensteuerung besitzen jedoch den Nachteil, daß zum einen die axiale Glättung geschwindigkeits- und beschleunigungsabhängige Schleppfehler verursacht und damit die Konturgenauigkeit verschlechtert. Um einen solchen Konturfehler zu verhindern, bleibt nur die Verringerung der Bahnbeschleunigungsgrenze, um Stoß- und Ruckbelastung zu verringern. Das hat jedoch andererseits zur Folge, daß die Leistungsfähigkeit der Maschine nicht voll ausgenutzt wird.

Aus der EP-A-0 089 156 ist ein Verfahren sowie eine Vorrichtung zur Beschleunigungsführung und zum Abbremsen bekannt. Darin ist jedoch keine Geschwindigkeitsführung als solche offenbart. Auch werden keine Maßnahmen gezeigt, welche eine Ruckbegrenzung ermöglichen. Die WO-A-94/12916 zeigt ein Verfahren zur Beschleunigungsführung für elektrische Antriebe, bei dem jedoch lediglich ein Teilvorgang dargestellt ist, nämlich das Verfahren auf Sollgeschwindigkeit. Ein zielgenaues Einbremsen in einen Zielzustand wird dem Fachmann nicht gezeigt. Auch sind keine Maßnahmen zur Erreichung einer Ruckbegrenzung offenbart. Aus der EP-A 0 268 491 ist ein mehrachsiger Roboter mit einer speziellen Bewegungsführung bekannt, wobei jedoch keine Ruckbegrenzung und kein zielgenaues vorausschauendes Einbremsen in einen Zielzustand gezeigt ist. Aus einem aus der EP-A-0 191 103 bekannten Verfahren ist eine Bewegungsführung für einen mehrgelenkigen Roboterarm bekannt, bei dem lediglich ein kürzest möglicher Beschleunigungs- und Abbremsvorgang erreicht werden soll. Maßnahmen, welche eine Ruckbegrenzung ermöglichen, sind nicht gezeigt.

Der Erfindung liegt daher die Aufgabe zugrunde, ein Verfahren zur Geschwindigkeitsführung so auszugestalten, daß Momentstöße auf Getriebe und Maschine vermieden werden können und die Anregung der Maschine zu Schwingungen einstellbar verringert wird, dabei jedoch nach Möglichkeit die Leistungsfähigkeit der Maschine weitmöglichst ausgenutzt werden kann. Durch eine solche Ruckbegrenzung soll darüber hinaus erreicht werden, daß Loseeffekte nach Möglichkeit nicht entstehen bzw. bereits vorhandene Loseeffekte im Laufe des Betriebes nicht noch verstärkt werden.

Gemäß der Erfindung wird diese Aufgabe durch folgende Merkmale gelöst:
1.1 die Geschwindigkeitsführung berücksichtigt ein über die Zeit vorgegebenes Sollgeschwindigkeitsprofil, wobei in einer Sollgeschwindigkeitsanfahrphase die Bahngeschwindigkeit so geführt wird, daß eine vorgegebene Beschleunigungsgrenze unter optimaler Ausschöpfung des maximal zulässigen Rucks so angefahren wird, daß mit möglichst wenigen Ruckänderungen schnellstmöglich auf Sollgeschwindigkeit gefahren wird,
1.2 dabei werden lokale Geschwindigkeitsbegrenzungen an bestimmten Zielpunkten berücksichtigt, welche vorausschauend in einer Zielanfahrphase angefahren werden, wozu eine eventuelle Wegreserve ermittelt wird, indem jederzeit vorausschauend der benötigte Bremsweg bestimmt und mit der noch bis zum Erreichen des Zielpunktes zu verfahrenden Wegstrecke verglichen wird,
1.3 die Zielanfahrphase untergliedert sich in eine Beschleunigungsabbauphase, eine eventuelle Geschwindigkeitkonstantfahrphase und eine Bremsphase,
1.4 die Beschleunigungsabbauphase wird begonnen, sobald der benötigte Bremsweg unterschritten zu werden droht, spätestens jedoch ab dem Zeitpunkt, ab dem ein weiteres Verfahren auf der - sofern erreichten - Beschleunigungsgrenze gerade noch keine Überschreitung der vorgegebenen Sollgeschwindigkeit herbeiführt, indem die aufgebaute Beschleunigung mit maximal zulässigem Ruck auf Null abgebaut wird,
1.5 im Falle einer darüber hinaus vorhandenen Wegreserve wird diese in einer Geschwindigkeitkonstantfahrphase im Sinne einer möglichst lange beizubehaltenden Geschwindigkeitsobergrenze - sofern erreicht auf Sollgeschwindigkeit - abgefahren,
1.6 zum spätmöglichsten Zeitpunkt wird die Bremsphase durchgeführt, indem die Beschleunigung mit möglichst geringen kontinuierlichen Ruckänderungen stetig so bis auf die negative Beschleunigungsgrenze abgesenkt und auf die gleiche Weise wieder bis auf eine Beschleunigung von Null im Zielpunkt angehoben wird, daß die Bahngeschwindigkeit im Zielpunkt auf Zielgeschwindigkeit abgebremst wird.

Eine erste vorteilhafte Ausgestaltung der vorliegenden Erfindung ermöglicht den Einsatz über einen großen Geschwindigkeitsbereich und besitzt folgende Merkmale:
2.1 die Anzahl der Steuerdatensätze, die im Zuge des Satzübergriffs vorausschauend gelesen werden, ist im Rahmen der Größe eines verwendeten Datenpuffers variabel,
2.2 der Satzübergriff wird mit zunehmender Geschwindigkeit des Antriebes größer.

Eine weitere besonders vorteilhafte Ausgestaltung der vorliegenden Erfindung erhöht die Felxibilität und besitzt folgendes Merkmal:
3.1 eventuelle Vorschuboverridewerte werden beim vorausschauenden Beschleunigen berücksichtigt, indem eine darauf abgestimmte Regelreserve vorgehalten wird.

Eine weitere vorteilhafte Ausgestaltung der vorliegenden Erfindung ermöglicht ein exakteres Anfahren von Sollgeschwindigkeiten und besitzt folgendes Merkmal:
4.1 mit Ausnahme des ersten Datensatzes werden auch die Sollgeschwindigkeiten satzübergreifend gelesen und vorausschauend zum frühestmöglichen Zeitpunkt angefahren.

Eine weitere vorteilhafte Ausgestaltung der vorliegenden Erfindung, die die Einsatzfähigkeit des vorliegenden Verfahrens erhöht, besitzt folgendes Merkmal:
5.1 zu jedem Interpolationstakt ist eine Änderung der vorgegebenen Zielgeschwindigkeit sowie des Zielpunktes möglich.

Eine weitere vorteilhafte Ausgestaltung der vorliegenden Erfindung erhöht die Genauigkeit und besitzt folgendes Merkmal:
6.1 während in der Sollgeschwindigkeitsanfahrphase Beschleunigngsaufbau, Beschleunigungskonstantfahrphase und Beschleunigungsabbauphase im Interpolationstakt verändert werden, erfolgt das Anfahren der Sollgeschwindigkeit taktsynchron innerhalb eines Taktes durch einen Übergangstakt.

Eine vorteilhafte numerische Steuerung zur Duchführung des Verfahrens gemäß der vorliegenden Erfindung beinhaltet folgende Merkmale:
7.1 die Vorrichtung ist in einen satzbezogen arbeitenden Bereich zur Analyse von Steuerdaten und einen taktbezogen arbeitenden Bereich zur Geschwindigkeitsführung des elektrischen Antriebs unterteilt,
7.2 die Steuerdaten sind über eine Signalvorverarbeitungseinheit einem Datenpuffer zuführbar,
7.3 in der Signalvorverarbeitungseinheit sind in einer nicht-zyklischen satzbezogenen Vorverarbeitung relevante Geschwindigkeitsparameter aus den Steuerdaten ermittelbar und in den Datenpuffer eingespeicherbar, welche gleichzeitig parallel von der Steuerung im Rahmen des Satzübergriffes lesbar sind,
7.4 sowohl der Signalvorverarbeitungseinheit als auch der Steuerung sind als Maschinendaten eine geschwindigkeitsunabhängige Beschleunigungskennlinie sowie globale Maschinengeschwindigkeitsgrenzen und Maschinenbeschleunigungsgrenzen zwecks der Ermittlung der Geschwindigkeitsparameter nach den Verfahrensschritten 1.1 bis 1.6 zuführbar,
7.5 die Signale eines Override-Reglers sind der Steuerung zuführbar, wodurch individuelle Anpassungen des Steuerungsvorganges zu einer Korrektur der Geschwindigkeitsführung durch Vorhaltung einer darauf abgesteimmten Regelreserve vornehmbar sind.

Die mit der Erfindung erzielten Vorteile bestehen insbesondere darin, daß durch die Ruckbegrenzung die "Flankensteilheit" der Beschleunigungsänderung eingestellt werden kann und Momentstöße auf Getriebe und Maschine minimiert werden. Die Anregung der Maschine zu Schwingungen wird einstellbar verringert. Auf diese Weise lassen sich selbst bereits vorhandene Loseeffekte so handhaben, daß möglichst geringe Schwingungen an der Maschine hervorgerufen werden. Das hat zur Folge, daß die Konturgenauigkeit bei der Bearbeitung, z.B. eine bessere Oberflächengüte beim Schleifen oder eine genauere Maßhaltigkeit beim Laserschneiden, verbessert wird. Dies wiederum zieht den Vorteil nach sich, daß eventuell vorhandene Loseeffekte nicht verstärkt werden, mithin das Spiel etwa zwischen Zahnrädern im Laufe der Betriebszeit möglichst wenig erhöht wird. Da die geschwindigkeitsunabhängige Bahnbeschleunigungsgrenze beispielsweise bei gekrümmten Konturen nicht aufgrund starker Beschleunigungssprünge verringert werden muß, um störende Konturfehler zu verhindern, sondern auf einem konstant hohen Wert beibehalten werden kann, ergibt sich der Vorteil, daß die Leistungsfähigkeit der Maschine zu jeder Zeit voll ausgenutzt werden kann. Hinzu kommt, daß sich die aufgeführten Vorteile mit vorliegender Erfindung besonders effektiv und kostengünstig realisieren lassen.

Ein Ausführungsbeispiel der Erfindung ist in den Zeichnungen dargestellt und wird im folgenden näher erläutert. Dabei zeigen:
- FIG 1: Geschwindigkeitsverlauf zum Anfahren auf eine vorgegebene Sollgeschwindigkeit mit anschließendem Abbremsen auf eine definierte Zielgeschwindigkeit zu einem bestimmten Zielpunkt unter Berücksichtigung der ruckbegrenzten Geschwindigkeitsführung,
- FIG 2: Beschleunigungsverlauf zur Ansteuerung einer vorgegebenen Sollgeschwindigkeit und Abbremsen auf eine Zielgeschwindigkeit zu einem definierten Zielpunkt unter Berücksichtigung einer ebenfalls dargestellten Ruckbegrenzung,
- FIG 3: Blockschaltbild einer Vorrichtung zur ruckbegrenzten Geschwindigkeitsführung gemäß vorliegender Erfindung.

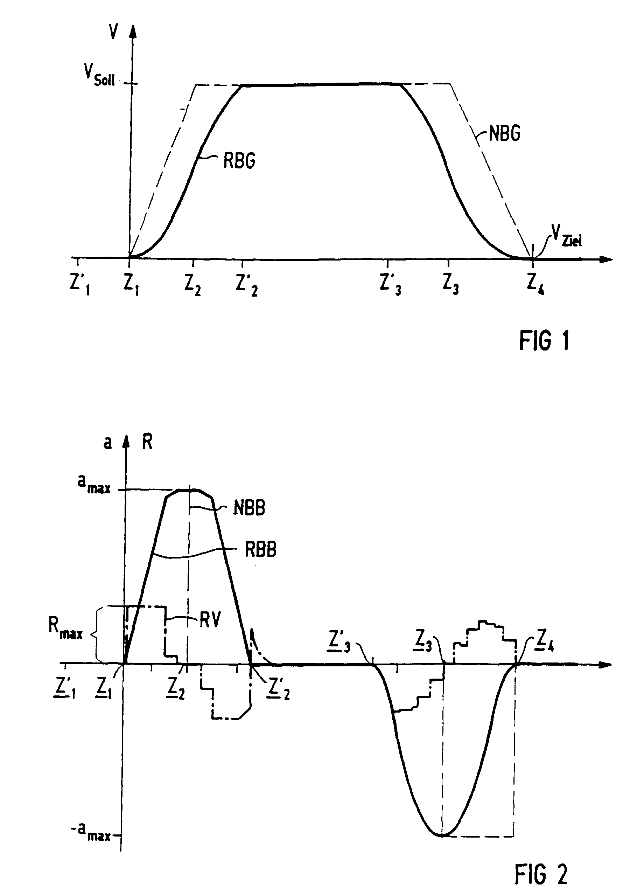

In der Darstellung gemäß FIG 1 ist ein Diagramm gezeigt, in dem der Verlauf der Geschwindigkeit V über der Zeit T aufgetragen ist. Dabei beschreiben die einzelnen Abschnitte auf der Abszisse jeweils einen Interpolationstakt. Auf der Ordinate sind zwei Geschwindigkeitswerte aufgetragen. Dies ist zum einen eine aktuell vorgegebene Sollgeschwindigkeit V_{Soll} welche zum Zeitpunkt Z₂ bzw. Z'₂ erreicht wird. Auf eine zweite Geschwindigkeit, die Zielgeschwindigkeit V_{Ziel}, wird zu einem bestimmten Zielpunkt Z₄ abgebremst. Zum Anfahren auf diese beiden Geschwindigkeiten sind in FIG 1 zwei verschiedene Geschwindigkeitsverläufe dargestellt. Ein erster Geschwindigkeitsverlauf, welche ohne die ruckbegrenzte Geschwindigkeitsführung gemäß der vorliegenden Erfindung erfolgt, ist der in Form einer gestrichelten Linie dargestellte nicht begrenzte Geschwindigkeitsverlauf NBG. Dieser zeigt, daß die Geschwindigkeit zu einem Zeitpunkt Z₁ bei Null beginnt und linear bis zur vorgegebenen Sollgeschwindigkeit V_{Soll} zum Zeitpunkt Z₂ ansteigt. Zwischen den Zeitpunkten Z₂ und Z₃ beschreibt der nicht begrenzte Geschwindigkeitsverlauf einen konstanten Wert, die Sollgeschwindigkeit V_{Soll}, welche im Sinne einer möglichst beizubehaltenden Geschwindigkeitsobergrenze geführt wird. Vom Zeitpunkt Z₃ an wird linear abnehmend auf die Zielgeschwindigkeit V_{Ziel} bis zum Zielpunkt Z₄ abgebremst und anschließend auf dieser Zielgeschwindigkeit V_{Ziel} weiterverfahren. Der zweite Geschwindigkeitsverlauf RBG, dargestellt durch eine durchgezogene Linie, gibt den Verlauf der Geschwindigkeit unter Einsatz der ruckbegrenzten Geschwindigkeitsführung gemäß vorliegender Erfindung wieder.

Aufgrund der angestrebten Ruckbegrenzung wird die Geschwindigkeit nicht mit maximaler Steigung, sondern ebenfalls ausgehend von Z₁ erst allmählich gesteigert, um schließlich in eine Phase größerer Geschwindigkeitszunahme einzumünden. Vor dem Erreichen der Sollgeschwindigkeit V_{Soll} zum Zeitpunkt Z'₂ werden die Geschwindigkeitszuwächse wieder verringert. Jedoch tritt mit Erreichen der Sollgeschwindigkeit auch beim ruckbegrenzten Geschwindigkeitsverlauf RBG ein leichter Knick auf. Aufgrund der Ruckbegrenzung wird die Sollgeschwindigkeit also erst zu einem späteren Zeitpunkt Z'₂ erreicht als bei NBG. Anschließend verläuft RBG ebenfalls möglichst lange auf Sollgeschwindigkeit, ehe zu einem möglichst späten Zeitpunkt Z'3 das Anfahren auf die vorgegebene Zielgeschwindigkeit V_{Ziel} erfolgt. Dabei wird der Geschwindigkeitsverlauf entsprechend der Geschwindigkeitszunahme von RBG geführt, nunmehr jedoch in Form einer Geschwindigkeitsabnahme. Im Unterschied zu dem nicht begrenzten Geschwindigkeitsverlauf NBG setzt die Abnahme der Geschwindigkeit beim ruckbegrenzten Geschwindigkeitsverlauf RBG vorausschauend aufgrund des Satzübergriffes bereits vor dem Zeitpunkt Z₃, nämlich zum Zeitpunkt Z'₃ ein. Ein Zeitpunkt Z'₁ kennzeichnet den Punkt, ab dem die ruckbegrenzte Geschwindigkeitsführung RBG mit der Beschleunigung beginnen müßte, wenn die Sollgeschwindigkeit V_{Soll} wie bei der nicht begrenzten Geschwindigkeitsführung NBG bereits zum Zeitpunkt Z₂ erreicht werden sollte.

In der Darstellung gemäß FIG 2 ist ein Diagramm gezeigt, in dem die Beschleunigung a für den Geschwindigkeitsverlauf aus FIG 1 für die Zeit T aufgetragen ist. Dabei entsprechen alle Zeitpunkte auf der Zeitachse T den Zeitpunkten der Zeitachse T aus FIG 1. Gleiches gilt für die entsprechende Interpolationspunkte Z₁, Z₂, Z₃, Z₄, Z'₁, Z'₂, Z'₃ und Z'₄, welchen die jeweils unterstrichenen synonymen Bezeichnungen entsprechen. In Anlehnung an den nichtbegrenzten Geschwindigkeitsverlauf NBG aus FIG 1 ist der Verlauf der sich aus dem genannten Geschwindigkeitsprofil ergebenden Beschleunigung, der nichtbegrenzte Beschleunigungsverlauf NBB, durch eine gestrichelte Linie dargestellt. Die Beschleunigungszunahme zum Zeitpunkt Z₁ verläuft direkt in Form eines Sprunges von der Beschleunigung NULL bis zur Maximalbeschleunigung aₘₐₓ und behält diesen Wert bis zum Erreichen des Zeitpunktes Z₂ bei. Da damit die vorgegebene Sollgeschwindigkeit V_{Soll} erreicht ist, fällt die Beschleunigung direkt von der Beschleunigungsobergrenze aₘₐₓ auf den Wert NULL zurück. Entsprechend dem konstanten Geschwindigkeitsverlauf auf der Geschwindigkeitsobergrenze, der vorgegebenen Sollgeschwindigkeit V_{Soll}, beträgt die Beschleunigung in diesem Bereich NULL. Zum Abbremsen der vorgegebenen Sollgeschwindigkeit V_{Soll} auf die Zielgeschwindigkeit V_{Ziel} zum definierten Zielpunkt Z₄ beschreibt der nichtbegrenzte Beschleunigungsverlauf NBB einen Sprung auf die negative Beschleunigung -aₘₐₓ. Mit Erreichen der Geschwindigkeit V_{Ziel} fällt die Beschleunigung zum Zeitpunkt Z₄ zurück auf den Wert NULL.

Ein dem ruckbegrenzten Geschwindigkeitsverlauf RBG aus FIG 1 entsprechender ruckbegrenzter Beschleunigungsverlauf RBB, in FIG 2 dargestellt in Form einer durchgängigen Linie, beschreibt im Gegensatz zum nichtbegrenzten Beschleunigungsverlauf NBB für die Sollgeschwindigkeitsanfahrphase eine Trapezform. Die Beschleunigung wird in einer Beschleunigungsaufbauphase unter Ausnutzung des maximal zulässigen Rucks Rₘₐₓ linear erhöht und auf diesem Wert beibehalten. Vor Erreichen der Maximalbeschleunigung aₘₐₓ wird die Beschleunigungszunahme in einem Übergangstakt verringert und schließlich in einer Beschleunigungskonstantfahrphase konstant auf aₘₐₓ gehalten. Vor Erreichen der vorgegebenen Sollgeschwindigkeit V_{Soll} schließt sich eine Beschleunigungsabbauphase an, in der die Beschleunigung vom Maximalwert aₘₐₓ wiederum nach einem Übergangstakt linear zurückgenommen wird.

Der entsprechende Verlauf des Rucks RV ist in einer strichpunktierten Linie dargestellt und zeigt in der Beschleunigungsanfahrphase einen Sprung auf den maximalen Ruck Rₘₐₓ, fällt schließlich im Übergangs takt ab und beträgt während der Beschleunigungskonstantfahrphase NULL. Anschließend erfolgt derselbe Verlauf im negativen Bereich, also gespiegelt an der Abszisse.

Bezüglich des ruckbegrenzten Beschleunigungsverlaufes RBG erfolgt der weitere Verlauf während der Konstantfahrphase auf V_{Soll} von RBG zwischen Z₂ und Z'₃ mit Beschleunigng NULL. In der Zielanfahrphase schließlich beschreibt RBG einen polynomialen Verlauf, indem die Beschleunigung jeweils mit möglichst geringen Beschleunigungsänderungen, was durch die geringen Sprünge des Verlaufs des Rucks RV verdeutlicht wird, kontinuierlich bis auf -aₘₐₓ abgesenkt wird. Von dort wird sie ebenso wieder sukzessive mit möglichst geringen Beschleunigungsänderungen bis zum Erreichen des Wertes NULL zum Zeitpunkt Z₄ erhöht. Der entsprechende Ruckverlauf RV verläuft aufgrund der Beschleunigungszunahme im positiven Bereich und weist, wie auch vorher im negativen Bereich, nur geringe Sprünge aufgrund der lediglich geringfügigen Beschleunigungsänderungen auf.

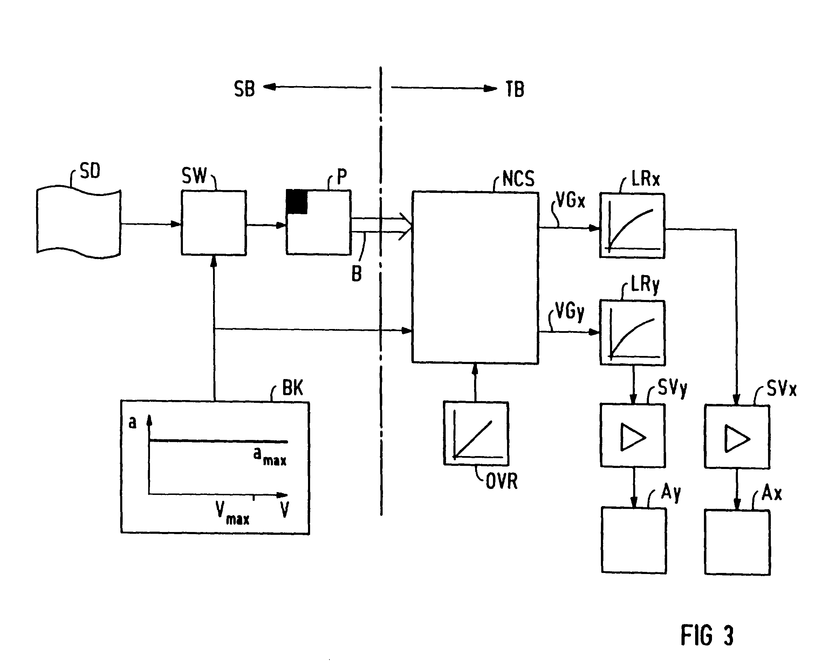

In der Darstellung gemäß FIG 3 ist ein Blockschaltbild gezeigt, welches eine mögliche Vorrichtung zur ruckbegrenzten Geschwindigkeitsführung gemäß vorliegender Erfindung darstellt. Die Vorrichtung ist unterteilt in einen satzbezogen arbeitenden Bereich SB, der zu Beginn der Verarbeitung steht, und einen taktbezogen arbeitenden Bereich TB, wobei die Grenze zwischen Datenpuffer P und der Steuerung NCS angesiedelt ist. Zwecks der satzübergreifenden Vorgehensweise werden die Steuerungsdaten SD in einen Puffer P zwischengespeichert, welcher Werte für eine vorgegebene Anzahl von Sätzen aufnehmen kann. Jedoch werden die Datensätze nicht direkt in den Puffer P eingebracht, sondern es werden davor in einer Signalvorverarbeitung SVV bereits Geschwindigkeitsparameter extrahiert. Letztere werden dann in den Puffer P eingebracht und besitzen den Vorteil, daß sie weniger Speicherplatz benötigen als der ursprüngliche Datensatz. Am Ausgang des Puffers P werden dessen Werte parallel über einen Datenbus B zur NC-Steuerung NCS geführt.

In die Signalvorverarbeitungseinheit SVV gelangen Informationen über die Maschinendaten, die zur Bestimmung der vorverarbeiteten Geschwindigkeitsparameter benötigt werden, wie etwa aₘₐₓ und Vₘₐₓ. Außerdem muß die verwendete geschwindigkeitsunabhängige Beschleunigungskennlinie BK bekannt sein. Alle diese Daten werden durch die Einheit BK repräsentiert und werden ebenfalls zur Steuerung NCS geführt, wo sie zur Geschwindigkeitsführung benötigt werden. Desweiteren gelangt das Signal eines Override-Reglers OVR zur NC-Steuerung NCS. Die dort berechneten Vorgabewerte VGx und VGy gelangen zu je einem Lageregler LRx und LRy. Von dort werden die entsprechenden Antriebssignale, z.B. für einen Schlittenantrieb in X- und Y-Richtung, über je einen Servoverstärker für den Antrieb in X-Richtung SVx zum Antrieb in X-Richtung Ax und für die Y-Richtung über den Servoverstärker SVy zum Antrieb in Y-Richtung Ay geführt.

Zur Realisierung einer ruckbegrenzten Geschwindigkeitsführung gemäß der vorliegenden Erfindung wird die Bahngeschwindigkeit V so geführt, daß eine geschwindigkeitsunabhängige Bahnbeschleunigungskennlinie BK berücksichtigt wird. Unter Ruck ist dabei die Ableitung der Beschleunigung a nach der Zeit T zu verstehen. Neben der Beschleunigungsbegrenzung aₘₐₓ werden zudem folgende Sollvorgaben berücksichtigt. Zum einen eine aktuell vorgegebene Sollgeschwindigkeit V_{Soll}, welche im Sinne einer möglichst beizubehaltenden Geschwindigkeitsobergrenze unter Ausnutzung der höchstzulässigen Beschleunigungsgrenze aₘₐₓ bzw. Ruckgrenze Rₘₐₓ angefahren wird. Außerdem wird eine Zielgeschwindigkeit V_{Ziel} berücksichtigt, welche zu einem genau definierten Zielpunkt erreicht werden soll. Auf diese Zielgeschwindigkeit V_{Ziel} wird zu einem möglichst späten Zeitpunkt so vorausschauend abgebremst, daß die Zielgeschwindigkeit V_{Ziel} sicher am Zielpunkt Z₄ mit einer Beschleunigung von NULL erreicht wird. Dazu arbeitet die Geschwindigkeitsführung gemäß der vorliegenden Erfindung hinsichtlich des Anfahrens auf Zielgeschwindigkeit satzübergreifend bzw. mit 'Look ahead', was bedeutet, daß nicht lediglich die aktuellen Steuerungsdaten eines Datensatzes zur Geschwindigkeitsführung herangezogen werden, sondern bereits zu diesem Zeitpunkt die Steuerungsdaten eines oder mehrerer folgenden Sätze mit zur Geschwindigkeitsführung herangezogen werden. Eine Vorrichtung zur Durchführung des Verfahrens gemäß der vorliegenden Erfindung ist in zwei Bereiche unterteilt, nämlich einen satzbezogen arbeitenden Bereich SB und einen taktbezogen arbeitenden Bereich TB. Der taktbezogene Bereich beinhaltet die wesentlichen Elemente zur Geschwindigkeitsführung, während der satzbezogene Bereich die Maßnahmen des 'Look ahead' beinhaltet. Da der satzbezogene Bereich SB einen langsameren Zyklus durchläuft als der taktbezogene TB, weil ein Satz in viele Takte zerfällt, lassen sich im satzbezogenen Bereich bereits Berechnungen im Rahmen einer Vorverarbeitung vornehmen, die die zeitkritische Geschwindigkeitsführung im taktbezogenen Bereich entlasten. Dementsprechend ist die Grenze zwischen den beiden Bereichen auch zwischen einer Vorverarbeitungseinheit SVV auf der satzbezogen arbeitenden Seite und der Steuerung NCS auf der taktgebunden arbeitenden Seite bei einem diese beiden Bereiche verbindenden Datenpuffer P angesiedelt, welcher im folgenden näher erläutert wird. Dabei kann der Datenpuffer P je nach Definition einer der beiden Seiten zugerechnet werden. In FIG 3 ist er der satzbezogenen Seite zugewiesen.

Im Rahmen des 'Look ahead' werden die Daten von vorausschauend zu lesenden Sätzen in der nicht taktgebundenen satzbezogenen Phase SB vorverarbeitet, indem für folgende Verarbeitungsstufen benötigte Geschwindigkeitsparameter soweit wie möglich bereits an dieser Stelle ermittelt werden. Dazu ist jedoch die Kenntnis der spezifischen Maschinendaten erforderlich. Darum werden diese nicht nur zur Steuerung NCS, sondern auch zur Signalvorverarbeitungseinheit SVV geführt. Solche Maschinendaten sind beispielsweise die globalen Maschinenachsgeschwindigkeitsgrenzen Vₘₐₓ und Maschinenachsbeschleunigungsgrenzen aₘₐₓ bzw. -aₘₐₓ. Desweiteren muß der Verlauf einer implementierten Beschleunigungskennlinie bekannt sein. Im vorliegenden Fall wird eine geschwindigkeitsunabhängige Beschleunigungskennlinie BK eingesetzt, deren Verlauf erfindungsgemäß zu jedem Zeitpunkt unabhängig von der Schwierigkeit der zu fertigenden Kontur konstant hoch auf der Beschleunigungsgrenze aₘₐₓ verläuft. Jedoch kann das vorliegende Verfahren auch in Verbindung mit jedem anderen Verlauf einer Beschleunigungsbegrenzung, insbesondere einer geschwindigkeitsabhängigen Beschleunigungsbegrenzung, verwendet werden.

Die in der Vorverarbeitung ermittelten Werte werden in einem Datenpuffer P eingespeichert. Von dort aus kann die eigentliche NC-Steuerung NCS parallel sowohl die vorverarbeiteten Geschwindigkeitsparameter des aktuellen Datensatzes sowie die der satzübergreifend gelesenen Datensätze zur Berechnung einer ruckbegrenzten Geschwindigkeitsführung gemäß der vorliegenden Erfindung über einen Datenbus B lesen. Auf diese Art und Weise lassen sich lokale Geschwindigkeitsbegrenzungen aus dem über die Zeit vorgegebenen Geschwindigkeitsprofil, welches durch die Steuerungsdaten SD beschrieben wird, vorausschauend anfahren.

Um auch eine manuelle Optimierung und Anpassung an die technologischen Gegebenheiten beispielsweise des Werkstückes durch eine die Steuerung bedienende Person zu ermöglichen, wird ein Vorschuboverride berücksichtigt, also die Möglichkeit, den Absolutvorschub proportional in einem Bereich beispielsweise zwischen 0 und 200% zu varieren. Ein solcher Override kann somit zur Folge haben, daß die Bedingungen vor allem beim Abbremsen auf Zielgeschwindigkeit V_{Ziel} verändert werden. Um dies rechtzeitig berücksichtigen zu können, gelangen die Informationen des Overridereglers OVR direkt zur Steuerung NCS. Zur möglichen Berücksichtigung eines Overrides wird eine Regelreserve im System vorgehalten, indem die verwendete maximale Beschleunigungsmöglichkeit aₘₐₓ geringer als die maximal mögliche Beschleunigung des verwendeten Antriebs bemessen wird.

Die mit Hilfe dieser Informationen in der Steuerung ermittelten Vorgabewerte VGx und VGy werden getrennt für jede Dimension, hier vereinfacht anhand eines zweidimensionalen Systems dargestellt, wobei jedoch jede beliebige Zahl an Dimensionen verwendet werden kann, jeweils einem Lageregler LRx und LRy zugeführt. Die Indizes x bzw. y kennzeichnen dabei die jeweilige Dimension. Über jeweils einen Servoverstärker SVx und SVy gelangen die Steuerungswerte schließlich zu den einzelnen Antrieben Ax und Ay.

Damit ein vorausschauendes Abbremsen zu einem möglichst späten Zeitpunkt auf Zielgeschwindigkeit V_{Ziel} mit Beschleunigung NULL bei Erreichen des Zielpunktes jederzeit gewährleistet ist, wird der 'Look ahead' bzw. die Weite des Satzübergriffes mit der Geschwindigkeit des Vorschubes des entsprechenden elektrischen Antriebes variiert. So reicht bei einer geringen Vorschubgeschwindigkeit des elektrischen Antriebes eine Zwischenspeicherung der Geschwindigkeitsparameter von wenigen Datensätzen, beispielsweise zwei Datensätzen, in den Puffer P aus, um den vorausschauenden Abbremsvorgang zu gewährleisten. Mit zunehmender Vorschubgeschwindigkeit ergibt sich jedoch die Notwendigkeit, im Rahmen der Größe des verwendeten Datenpuffers P die Anzahl der vorverarbeiteten Steuerdatensätze SD, welche vorausschauend gelesen werden, im Vergleich zu den bei geringer Geschwindigkeit verarbeiteten wenigen Datensätzen SD zu erhöhen. Um einen möglichst weiten Geschwindigkeitsbereich abzudecken, empfiehlt es sich somit, die Größe des verwendeten Datenpuffers P so auszugestalten, daß die vorverarbeiteten Geschwindigkeitsparameter ausreichend vieler Steuerungsdatensätze SD eingespeichert werden können. Eine erfindungsgemäß ausreichende Puffergröße liegt bei einer Speicherfähigkeit der Geschwindigkeitsparameter von zwischen 10 bis 50 Steuerdatensätzen vor.

Um eine vorgegebene Sollgeschwindigkeit V_{Soll} anzufahren, wird die Beschleunigung a in mehreren unterschiedlichen Phasen geführt. Am Beginn einer Sollgeschwindigkeitsanfahrphase zum Zeitpunkt Z₁ steht die Beschleunigungsaufbauphase. Dabei wird die Beschleunigung unter optimaler Ausnutzung des maximal zulässigen Rucks Rₘₐₓ erhöht, da die Sollgeschwindigkeit V_{Soll} unabhängig von einer eventuell schon vorhandenen Anfangsbeschleunigung schnellstmöglich erreicht werden soll. Der resultierende ruckbegrenzte Geschwindigkeitsverlauf RBG nimmt somit kontinuierlich mit konstant steigender Beschleunigung zu, wobei der Ruckverlauf RV konstant ist.

Vor Erreichen der Beschleunigungsobergrenze aₘₐₓ wird der Beschleunigungszuwachs verringert, begleitet von einem negativen Ruck, welcher geringer als der maximal zulässige Ruck Rₘₐₓ ausfällt. Dies dient einem möglichst stetigen Übergang auf aₘₐₓ. In der sich anschließenden Beschleunigungskonstantfahrphase wird RBB konstant auf aₘₐₓ mit einem konstanten Ruck von NULL geführt. Der ruckbegrenzte Geschwindigkeitsverlauf RBG steigt in dieser Phase linear mit konstanten Geschwindigkeitszuwächsen an. Analog dazu schließt sich die Beschleunigungsabbauphase an, wobei beim ruckbegrenzten Beschleunigungsverlauf RBB erst mit einem geringen negativen Ruck die Beschleunigung geringfügig von aₘₐₓ zurückgenommen wird und anschließend mit einem entsprechend größeren, jedoch im zulässigen Bereich liegenden negativen Ruck linear auf eine Beschleunigung von NULL zurückgenommen wird. Die drei geschilderten Phasen der Beschleunigungsführung haben gemeinsam, daß der Ruck jeweils nur im Interpolationstakt geändert wird.

Mit Erreichen der Sollgeschwindigkeit im Zeitpunkt Z'₂ stellt sich das Problem, daß V_{Soll} möglichst taktsynchron mit der Beschleunigung NULL erreicht werden soll. Darum schließt sich in der Sollgeschwindigkeitsanfahrphase eine vierte Teilphase an, in der in einem Übergangs takt innerhalb eines Taktes taktsynchron auf V_{Soll} gefahren wird. Aus diesem Grund erfolgt innerhalb dieses Taktes ein Sprung im Ruckverlauf RV. Die dadurch bedingte Unsauberheit im Ruckverlauf ist jedoch im Vergleich zum erzielten Vorteil hinnehmbar. der resultierende Kurvenzug der ruckbegrenzten Beschleunigung RBB stellt sich somit in Form eines Trapezes da, dessen Schenkel jeweils vor Erreichen der kürzeren Grundseite einen leichten Knick aufweisen.

Stellt man diesen ruckbegrenzten Verlauf von Geschwindigkeit RBG und Beschleunigung RBB einem nicht-ruckbegrenzten Verlauf NBG und NBB gegenüber, welche in Form von gestrichelten Linien in FIG 1 und FIG 2 dargestellt sind, so wird deutlich, daß die Sollgeschwindigkeit bereits zum Zeitpunkt Z₂ erreicht werden könnte, wenn die Beschleunigung a schlagartig in Z₁ auf aₘₐₓ gesetzt würde. Daraus reslutierte zwar ein linearer Anstieg der Geschwindigkeit mit entsprechend maximaler Steigung im gesamten Bereich des Beschleunigungsaufbaus, jedoch hat eine solche schlagartige Erhöhung der Beschleunigung von NULL auf aₘₐₓ einen unendlichen Ruck zur Folge. Abgesehen von der Tatsache, daß ein solcher Ruckverlauf technisch nicht möglich ist, so wird doch deutlich, welche erhebliche Ruckbelastung selbst ein realistischer angenäherter Verlauf ohne Ruckbegrenzung aufweist.

Die erreichte Sollgeschwindigkeit V_{Soll} wird erfindungsgemäß solange wie möglich als Geschwindigkeitsobergrenze gefahren, um angepaßt auf die technologischen Erfordernisse des bearbeiteten Werkstückes möglichst lange einen optimalen Vorschub zu erreichen, der nur aufgrund lokaler Geschwindigkeitsbegrenzungen, zum Beispiel wegen kritischen Konturen wie nichttangentialen Bereichen, ein Abweichen von der Sollgeschwindigkeit erfordert. Aus diesem Grund werden Zielgeschwindigkeiten an genau definierten Zielpunkten berücksichtigt, die vorausschauend im Rahmen des Satzübergriffes mit den in der Signalvorverarbeitung ermittelten Geschwindigkeitsparametern angefahren werden. Da beispielsweise bei Satznachladestörungen Änderungen notwendig werden können, ist zu jedem Interpolationstakt, also zu jedem Zeitpunkt einer Berechnung einer neuen Stützstelle, eine Änderung der vorgegebenen Zielgeschwindigkeit sowie des Zielpunktes möglich. Die Zielanfahrphase selber ist in drei Phasen gegliedert. Die erste davon, eine Beschleunigungsabbauphase, schließt sich direkt an den Zeitpunt Z₂ des Erreichens der Sollgeschwindigkeit V_{Soll} an. Dabei wird eine gegebenenfalls noch vorhandene positive Beschleunigung mit konstantem maximalen Ruck auf NULL abgebaut. Ein solcher Sachverhalt tritt vor allem dann auf, wenn noch vor Erreichen der Sollgeschwindigkeit die Zielanfahrphase eingeleitet wird bzw. werden muß. In FIG 2 ist dieser Sachverhalt der besseren Übersichtlichkeit nicht dargestellt.

Vielmehr entfällt die Beschleunigungsabbauphase dort, weil die Sollgeschwindigkeit bereits erreicht ist, bevor der Zielpunkt angefahren wird.

Auf die Beschleunigungsabbauphase folgt eine Geschwindigkeitskonstantfahrphase, welche in den FIG 1 und 2 zwischen den Zeitpunkten Z₂ und Z'₃ auftritt. In der Regel wird diese Phase auf der vorgegebenen Sollgeschwindigkeit verfahren. Lediglich falls letztere nicht erreicht werden konnte, so wird die entsprechende Momentangeschwindigkeit zugrunde gelegt. Die dritte Phase, die eigentliche Bremsphase, wird damit immer ausgehend von einer Beschleunigng von NULL parametriert und endet ihrerseits wieder mit einer Beschleunigng von NULL. Dabei wird die Beschleunigng ausgehend vom Punkt Z'₃ jeweils mit möglichst geringen kontinuierlichen Ruckänderungen in einem polynomialen Verlauf allmählich stetig bis auf -aₘₐₓ abgesenkt und von dort ebenso wieder bis auf eine Beschleunigung von NULL im Zielpunkt Z₄ ansteigt. Es handelt sich demnach um einen Geschwindigkeitsübergang von Beschleunigung NULL auf Beschleunigung NULL. Die in der Bremsphase abgefahrene Wegstrecke ist jedoch nicht vorgegeben, da unter der Maxime eines möglichst ruckfreien Verlaufes und nicht eines möglichst kurzen Weges verfahren wird. Die benötigte Wegstrecke für die Bremsphase unterscheidet sich somit von Bremsvorgang zu Bremsvorgang, kann jedoch einfach ermittelt werden.

Damit gewährleistet wird, daß die Bremsphase mit Erreichen des Zielpunktes abgeschlossen ist, wird ein möglichst später Zeitpunkt Z'₃ ermittelt, zu dem die Bremsphase einsetzen muß. Zur Bestimmung des spätmöglichsten Zeitpunktes für den Abbremsvorgang wird der Übergang in die Zielanfahrphase immer so früh ausgelöst, daß eine Wegreserve, in den FIG 1 und 2 der Abschnitt zwischen Z₂ und Z'₃, übrig bleibt. Eine solche Wegreserve wird ermittelt, indem der benötigte Bremsweg jederzeit vorausschauend bestimmt wird und mit der noch bis zum Erreichen des Zielpunktes Z₄ zu verfahrenden Wegstrecke verglichen wird. Ergibt sich daraus eine positive Differenz, so stellt diese die vorhandene Wegreserve dar. Ist der so ermittelte für die Zielanfahrphase zur Verfügung stehende Bremsweg zu knapp, ergibt sich also keine Wegreserve, so können die Beschleunigungsabbauphase, die Geschwindigkeitskonstantfahrphase und die Bremsphase nicht einzeln durchlaufen werden. In diesem Fall wird solange die Vorgehensweise der Sollgeschwindigkeitsanfahrphase angewandt, bis eine ständige Überprüfung ergibt, daß wieder auf das standardmäßige Anfahren des Zielpunktes übergegangen werden kann.

Ein solcher Fall tritt beispielsweise dann auf, wenn am Satzwechsel im Rahmen des Satzübergriffs ein neuer maßgeblicher Zielpunkt ermittelt wird, der zwar weniger restriktiv ist, aber dennoch ein sofortiges Anfahren erfordert. Häufig kann man in einem solchen Fall nicht zuerst eine noch vorhandene Beschleunigung in der Beschleunigungsabbauphase abbauen, bevor mit der Bremsphase begonnen wird, da sich der Bremsweg zu weit ausdehnen würde. Darum wird direkt, wie beim Anfahren auf Sollgeschwindigkeit, auf die Zielgeschwindigkeit gefahren und in jedem Takt kontrolliert,ob auf die Standardmethode übergegangen werden kann.

In einer weiteren vorteilhaften Ausführungsform werden nicht nur Zielgeschwindigkeiten V_{Ziel}, sondern auch Sollgeschwindigkeiten V_{Soll} satzübergreifend und somit vorausschauend zum frühestmöglichen Zeitpunkt angefahren. Da ein solches Vorgehen logischerweise erst mit dem zweiten Datensatz durchführbar ist, wird der erste Datensatz nach dem herkömmlichen Verfahren wie oben dargestellt angefahren.

## Patentansprüche

1. Verfahren zur Geschwindigkeitsführung von elektrischen Antrieben, insbesondere von Werkzeugmaschinen oder Robotern, mit folgenden Verfahrensschritten:
1.1 die Geschwindigkeitsführung berücksichtigt ein über die Zeit (T,T) vorgegebenes Sollgeschwindigkeitsprofil (V_{Soll}), wobei in einer Sollgeschwindigkeitsanfahrphase die Bahngeschwindigkeit (V) so geführt wird, daß eine vorgegebene Beschleunigungsgrenze (BK, aₘₐₓ) unter optimaler Ausschöpfung des maximal zulässigen Rucks (Rₘₐₓ) so angefahren wird, daß mit möglichst wenigen Ruckänderungen schnellstmöglich auf sollgeschwindigkeit (V_{Soll)} gefahren wird,
1.2 dabei werden lokale Geschwindigkeitsbegrenzungen (V_{Ziel}) an bestimmten Zielpunkten (Z₄,Z₄) berücksichtigt, welche vorausschauend in einer Zielanfahrphase angefahren werden, wozu eine eventuelle Wegreserve ermittelt wird, indem jederzeit vorausschauend der benötigte Bremsweg bestimmt und mit der noch bis zum Erreichen des Zielpunktes (Z₄,Z₄) zu verfahrenden Wegstrecke verglichen wird,
1.3 die Zielanfahrphase untergliedert sich in eine Beschleunigungsabbauphase, eine eventuelle Geschwindigkeitkonstantfahrphase und eine Bremsphase,
1.4 die Beschleunigungsabbauphase wird begonnen, sobald der benötigte Bremsweg unterschritten zu werden droht, spätestens jedoch ab dem Zeitpunkt, ab dem ein weiteres Verfahren auf der - sofern erreichten - Beschleunigungsgrenze (aₘₐₓ) gerade noch keine Überschreitung der vorgegebenen Sollgeschwindigkeit (V_{Soll}) herbeiführt, indem die aufgebaute Beschleunigung (a) mit maximal zulässigem Ruck auf Null abgebaut wird,
1.5 im Falle einer darüber hinaus vorhandenen Wegreserve wird diese in einer Geschwindigkeitkonstantfahrphase im Sinne einer möglichst lange beizubehaltenden Geschwindigkeitsobergrenze - sofern erreicht auf sollgeschwindigkeit (Vₛₒₗₗ) - abgefahren,
1.6 zum spätmöglichsten zeitpunkt (Z'₃,Z'₃) wird die Bremsphase durchgeführt, indem die Beschleunigung mit möglichst geringen kontinuierlichen Ruckänderungen stetig sc bis auf die negative Beschleunigungsgrenze (-aₘₐₓ) abgesenkt und auf die gleiche Weise wieder bis auf eine Beschleunigung von Null im Zielpunkt (Z4) angehoben wird, daß die Bahngeschwindigkeit (V) im Zielpunkt (z4) auf Zielgeschwindigkeit (V_{Ziel}) abgebremst wird.

2. Verfahren nach Anspruch 1, mit folgenden weiteren Verfahrensschritten:
2.1 die Anzahl der Steuerdatensätze (SD), die im Zuge des Satzübergriffs vorausschauend gelesen werden, ist im Rahmen der Größe eines verwendeten Datenpuffers (P) variabel,
2.2 der Satzübergriff wird mit zunehmender Geschwindigkeit des Antriebes vergrößert.

3. Verfahren nach Anspruch 1 oder 2, mit folgendem weiteren Verfahrensschritt:
3.1 eventuelle Vorschuboverridewerte (OVR) werden beim vorausschauenden Beschleunigen berücksichtigt, indem eine darauf abgestimmte Regelreserve vorgehalten wird.

4. Verfahren nach einem der vorangehenden Ansprüche, mit folgendem weiteren Verfahrensschritt:
4.1 mit Ausnahme des ersten Datensatzes werden auch die Sollgeschwindigkeiten (V_{Soll}) satzübergreifend gelesen und vorausschauend zum frühestmöglichen Zeitpunkt angefahren.

5. Verfahren nach einem der vorangehenden Ansprüche, insbesondere zur taktgesteuerten Geschwindigkeitsführung, mit folgendem weiteren Verfahrensschritt:
5.1 zu jedem Interpolationstakt ist eine Änderung der vorgegebenen Zielgeschwindigkeit (V_{Ziel}) sowie des Zielpunktes (Z₄,Z₄) möglich.

6. Verfahren nach einem der vorangehenden Ansprüche, insbesondere zur taktgesteuerten Geschwindigkeitsführung, mit folgendem weiteren Verfahrensschritt:
6.1 während in der Sollgeschwindigkeitsanfahrphase Beschleunigungsaufbau, Beschleunigungskonstantfahrphase und Beschleunigungsabbauphase im Interpolationstakt verändert werden, erfolgt das Anfahren der Sollgeschwindigkeit (V_{Soll}) taktsynchron innerhalb eines Taktes durch einen Übergangs takt.

7. Numerische Steuerung zur Durchführung des Verfahrens zur Geschwindigkeitsführung von elektrischen Antrieben, insbesondere von Werkzeugmaschinen und Robotern, nach einem der vorangehenden Ansprüche, mit folgenden Merkmalen:
7.1 die Vorrichtung ist in einen satzbezogen (SB) arbeitenden Bereich zur Analyse von Steuerdaten und einen taktbezogen (TB) arbeitenden Bereich zur Geschwindigkeitsführung des elektrischen Antriebs unterteilt,
7.2 die Steuerdaten (SD) sind über eine Signalvorverarbeitungseinheit (SVV) einem Datenpuffer (P) zuführbar,
7.3 in der Signalvorverarbeitungseinheit (SVV) sind in einer nicht-zyklischen satzbezogenen Vorverarbeitung relevante Geschwindigkeitsparameter aus den Steuerdaten (SD) ermittelbar und in den Datenpuffer (P) eingespeicherbar, welche gleichzeitig parallel von der Steuerung (NCS) im Rahmen des Satzübergriffes lesbar sind,
7.4 sowohl der Signalvorverarbeitungseinheit (SVV) als auch der Steuerung (NCS) sind als Maschinendaten eine geschwindigkeitsunabhängige Beschleunigungskennlinie (BK) sowie globale Maschinengeschwindigkeitsgrenzen (Vₘₐₓ) und Maschinenbeschleunigungsgrenzen (aₘₐₓ) zwecks der Ermittlung der Geschwindigkeitsparameter nach den Verfahrensschritten 1.1 bis 1.6 zuführbar,
7.5 die Signale eines Override-Reglers (OVR) sind der Steuerung (NCS) zuführbar, wodurch individuelle Anpassungen des Steuerungsvorganges zu einer Korrektur der Geschwindigkeitsführung durch Vorhaltung einer darauf abgestimmten Regelreserve vornehmbar sind.

## Claims

1. Method for controlling the speed of electric drives, in particular of machine tools or robots, having the following method steps:
1.1 the speed control takes into account a desired speed profile (V_{des}) which is prescribed over time (T, T), in which case, in a desired speed approach phase, the path speed (V) is controlled in such a way that a prescribed acceleration limit (BK, aₘₐₓ) is approached with optimum utilization of the maximum permissible jolt (Rₘₐₓ), in such a way that the machine is adjusted to the desired speed (V_{des}) as quickly as possible with as few jolt changes as possible,
1.2 in this context, local speed limitations (V_{targ}) are taken into account at certain target points (Z₄, Z₄) which are approached in a look-ahead manner in a target approach phase, to which end a possible travel margin is determined by determining the required braking travel at all times in a look-ahead manner and comparing it with the travel distance still to be covered until the target point (Z₄, Z₄) is reached,
1.3 the target approach phase is subdivided into an acceleration decrease phase, a possible constant speed phase and a braking phase,
1.4 the acceleration decrease phase is started as soon as there is a risk of the required braking travel being undershot, but at the latest starting from the time starting from which further operation at the acceleration Limit (aₘₐₓ) - insofar as it is reached - just fails to cause the prescribed desired speed (V_{des}) to be exceeded, by decreasing the built-up acceleration (a) with a maximum permissible jolt to zero,
1.5 in the case when a travel margin is also present, said travel margin is reduced to the desired speed (V_{des}) - insofar as it is reached - in a constant speed phase in terms of a speed upper-limit which is to be maintained as long as possible,
1.6 at the latest possible time (Z'₃, Z'₃), the braking phase is carried out by reducing the acceleration steadily to the negative acceleration limit (-aₘₐₓ) with the smallest possible continuous jolt changes, and raising it again in the same way to an acceleration from zero at the target point (Z4), so that the path speed (V) is braked to target speed (V_{targ}) at the target point (Z4).

2. Method according to Claim 1, having the following further method steps:
2.1 the number of control data blocks (SD) which are read in a look-ahead manner in the course of the multi-block handling procedure is variable within the limits of the size of the data buffer (P) used,
2.2 the multi-block handling procedure is increased as the speed of the drive increases.

3. Method according to Claim 1 or 2, having the following further method step:
3.1 possible forward feed override values (OVR) are taken into account in the look-ahead acceleration by maintaining a control margin, which is matched thereto,

4. Method according to one of the preceding claims, having the following further method step:
4.1 with the exception of the first data block, the desired speeds (V_{des}) are also read in a multi-block handling procedure and are approached in a look-ahead manner at the earliest possible time.

5. Method according to one of the preceding claims, in particular for clock-controlled speed control, having the following further method step:
5.1 the prescribed target speed (V_{targ}) and the target point (Z₄, Z₄) can be changed at any interpolation clock cycle.

6. Method according to one of the preceding claims, in particular for clock-controlled speed control, having the following further method step:
6.1 whereas, in the desired speed approach phase, the acceleration increase, constant acceleration phase and acceleration decrease phase are changed using the interpolation clock, the desired speed (V_{des}) is approached in synchronism with the clock within one clock cycle by means of a transition clock.

7. Numerical control for carrying out the method for controlling the speed of electric drives, in particular of machine tools and robots, according to one of the preceding claims, having the following features:
7.1 the device is divided into an area, which operates in a block-specific (SB) manner, for analysing control data, and an area, which operates in a clock-specific (TB) manner, for controlling the speed of the electric drive,
7.2 the control data (SD) can be fed via a signal preprocessing unit (SVV) to a data buffer (P),
7.3 in the signal preprocessing unit (SVV), relevant speed parameters can be determined from the control data (SD) in a noncyclical, block-specific preprocessing procedure and can be stored in the data buffer (P), which control data (SD) can be simultaneously read in parallel by the controller (NCS) within the scope of the multi-block handling procedure,
7.4 a speed-independent acceleration characteristic curve (BK) as well as global machine speed limits (Vₘₐₓ) and machine acceleration limits (aₘₐₓ) can be fed as machine data both to the signal preprocessing unit (SVV) and to the controller (NCS), in order to determine the speed parameters, in accordance with method steps 1.1 to 1.6
7.5 the signals of an override control system (OVR) can be fed to the controller (NCS), as a result of which individual adaptations of the control procedure can be performed in order to correct the speed control, by maintaing a control margin, which is matched thereto.

## Revendications

1. Procédé de contrôle de vitesse de dispositifs électriques d'entraînement, notamment de machines-outils ou de robots, ayant les caractéristiques suivantes :
1.1 le contrôle de vitesse prend en compte un profil de vitesse de consigne (V_{Soll}) prescrit en fonction du temps (T, T), la vitesse (V) sur la trajectoire étant contrôlée dans une phase d'approche de vitesse de consigne de telle sorte qu'une limite d'accélération prescrite (BK, aₘₐₓ) est approchée avec une exploitation optimale de la suraccélération maximale autorisée (Rₘₐₓ) de manière à arriver à la vitesse de consigne (V_{Soll}) le plus rapidement possible et avec le moins possible de variations de suraccélération,
1.2 ce faisant, on prend en compte des limitations de vitesse locales (V_{Ziel}) en certains points visés (Z₄, Z₄) qui sont approchés par anticipation dans une phase d'approche de but, une éventuelle réserve de distance étant déterminée à cet effet en déterminant à tout instant par anticipation la distance de freinage nécessaire et en la comparant à la distance encore à parcourir jusqu'au point visé (Z₄, Z₄),
1.3 la phase d'approche de but se décompose en une phase d'annulation d'accélération, une éventuelle phase à vitesse constante et une phase de freinage,
1.4 la phase d'annulation d'accélération commence dès qu'on risque de passer en dessous de la distance de freinage nécessaire, mais au plus tard à l'instant à partir duquel une poursuite de la commande à la limite d'accélération (aₘₐₓ) - dans la mesure où elle est atteinte - ne provoque encore tout juste aucun dépassement de la vitesse de consigne (V_{Soll}) prescrite, l'accélération établie (a) étant annulée avec la suraccélération maximale autorisée,
1.5 dans le cas d'une réserve de distance présente au-delà, celle-ci est parcourue dans une phase à vitesse constante dans le sens d'une limite supérieure de vitesse à conserver le plus longtemps possible - à la vitesse de consigne (VSoll) dans la mesure où elle est atteinte -,
1.6 à l'instant le plus tardif possible (Z₃, Z'₃), la phase de freinage est effectuée, en diminuant l'accélération constamment, avec des variations de suraccélération continues minimales, jusqu'à la limite d'accélération négative (-aₘₐₓ) et en la réaugmentant de la même manière jusqu'à une accélération de zéro au point visé (Z₄) de telle sorte que la vitesse (V) sur la trajectoire est freinée au point visé (Z₄) à la vitesse visée (V_{Ziel}).

2. Procédé selon la revendication 1, comportant les autres étapes suivantes :
2.1 le nombre des blocs de données de commande (SD) qui sont lus d'avance au cours de l'anticipation est variable dans les limites de la taille d'un tampon de données (P) utilisé,
2.2 l'étendue de l'anticipation sur plusieurs blocs est augmentée lorsque la vitesse du dispositif d'entraînement augmente.

3. Procédé selon la revendication 1 ou 2, comportant une autre étape suivante :
3.1 d'éventuelles valeurs de correction d'avance (OVR) sont prises en compte lors de l'accélération par anticipation en gardant une réserve de régulation appropriée.

4. Procédé selon l'une des revendications précédentes, comportant l'autre étape suivante :
4.1 à l'exception du premier bloc de données, les vitesses de consigne (V_{Soll}) sont aussi lues au-delà du bloc et sont approchées par anticipation à l'instant le plus tôt possible.

5. Procédé selon l'une des revendications précédentes, notamment pour le contrôle de vitesse commandé par périodes, comportant l'autre étape suivante :
5.1 à chaque période d'interpolation, une modification de la vitesse visée (V_{Ziel}) prescrite et du point visé (Z₄, Z₄) est possible.

6. Procédé selon l'une des revendications précédentes, notamment pour le contrôle de vitesse commandé par périodes, comportant l'autre étape suivante :
6.1 tandis que dans la phase d'approche de vitesse de consigne l'établissement d'accélération, la phase à accélération constante et la phase d'annulation d'accélération sont modifiés selon la période d'interpolation, l'approche de la vitesse de consigne (V_{Soll}) s'effectue de manière synchrone dans une période grâce à une période de transition.

7. Commande numérique pour la mise en oeuvre du procédé de contrôle de vitesse de moteurs électriques, notamment de machines-outils ou de robots, selon l'une des revendications précédentes, ayant les caractéristiques suivantes :
7.1 le dispositif est divisé en une zone (SB) travaillant par rapport au bloc pour l'analyse de données de commande et en une zone (TB) travaillant par rapport à la période pour le contrôle de vitesse du dispositif électrique d'entraînement,
7.2 les données de commande (SD) peuvent être envoyées à un tampon de données (P) par l'intermédiaire d'une unité de traitement préalable du signal (SVV)
7.3 dans l'unité de traitement préalable du signal (SVV), lors d'un traitement préalable non cyclique et se rapportant au bloc, des paramètres de vitesse déterminants peuvent être obtenus à partir des données de commande (SD) et peuvent être mémorisés dans le tampon de données (P), lesquels paramètres peuvent être lus en même temps et en parallèle par la commande (NCS) dans le cadre de l'anticipation au-delà du bloc,
7.4 aussi bien l'unité de traitement préalable du signal (SVV) que la commande (NCS) peuvent recevoir comme données techniques de la machine une courbe caractéristique d'accélération (BK) indépendante de la vitesse ainsi que des limites globales de vitesse (Vₘₐₓ) de la machine et des limites globales d'accélération (aₘₐₓ) de la machine afin de déterminer les paramètres de vitesse selon les étapes 1.1 à 1.6 du procédé,
7.5 les signaux d'un régulateur correcteur (OVR) peuvent être envoyés à la commande (NCS), des adaptations individuelles de l'opération de commande à une correction du contrôle de vitesse pouvant ainsi être effectuées en prévoyant une réserve de régulation appropriée.
